# EUROPÄISCHE PATENTSCHRIFT

(11) **EP 1 625 365 B1**
(45) Veröffentlichungstag und Bekanntmachung des Hinweises auf die Patenterteilung: **03.05.2017**
(21) Anmeldenummer: 04731174.1
(22) Anmeldetag: 05.05.2004
(51) Int. Cl.: G01F 23/26

(54) **KAPAZITIVE FÜLLSTANDSMESSUNG**
CAPACITANCE LEVEL MEASUREMENT
MESURE DE NIVEAU CAPACITIVÉ

(30) Priorität: 16.05.2003 DE 10322279
(43) Veröffentlichungstag der Anmeldung: 15.02.2006
(73) Patentinhaber: Endress + Hauser GmbH + Co. KG, 79689 Maulburg (DE)
(72) Erfinder: WERNET, Armin, 79618 Rheinfelden (DE); HEILIG, Clemens, 77654 Offenburg (DE); UPPENKAMP, Kaj, D-79664 Wehr (DE)
(74) Vertreter: Andres, Angelika Maria
(86) Internationale Anmeldenummer: PCT/EP2004/004700
(87) Internationale Veröffentlichungsnummer: WO 2004/102133

(56) Entgegenhaltungen:
- EP-A- 0 271 849
- EP-A- 0 338 400
- WO-A-03/050480
- DE-A- 3 643 389
- DE-A- 10 008 093
- DE-A- 19 757 190
- US-A- 5 602 333

## Beschreibung

Die Erfindung bezieht sich auf eine Vorrichtung zur kapazitiven Bestimmung und/oder Überwachung des Füllstandes eines Mediums in einem Behälter, mit mindestens einer Füllstandssonde, und mit mindestens einer Feldgeräteelektronik, die mit der Füllstandssonde verbunden ist, die ein Spannungsansteuersignal (sig₁) zur Ansteuerung der Füllstandssonde erzeugt, und die einen Messstrom (I₂) der Füllstandssonde empfängt und auswertet.

Kapazitive Messgeräte zur Füllstandsmessung sind seit vielen Jahren bekannt. Dabei bilden eine in den Behälter ragende Sonde und die Behälterwand oder zwei in den Behälter ragende Sonden einen Kondensator. Dessen Kapazität C₁ ist abhängig vom Füllstand und der Dielektrizitätskonstante des zu messenden Mediums. Somit kann aus der Kapazität auf den Füllstand rückgeschlossen werden.

EP 0 338 400 A beschreibt einen kapazitiven Sensor, bei dem der Füllstand aus der Impedanz eines Sensors bestimmt wird, der mit einer elektronischen Schaltung verbunden ist. Die elektronische Schaltung umfasst einen Mikrocomputer, der einen digitalen Sinusgenerator ansteuert. Der Sinusgenerator erzeugt eine Wechselspannung Ui, die einerseits über eine Impedanzanpassung an den Mikrocomputer weitergeleitet wird. Andererseits wird die Wechselspannung Ui über einen Strom/Spannungs-Wandler an den Sensor angelegt. Darauf reagiert der Sensor mit einer Wechselspannung Us, die über dem Strom/Spannungs-Wandler an die Impedanzanpassung und anschließend an den Mikrocomputer weitergeleitet wird. Die Impedanzanpassung berechnet aus den Wechselspannungen Us und Ui eine Impedanz und gibt diese Impedanz an den Mikrocomputer weiter, der aus der Impedanz den Füllstand bestimmt.

Eine Möglichkeit zur Messung dieser Kapazität C₁ ist die sogenannte Scheinstrommessung. Dabei wird z.B. mittels einer konventionellen Gleichrichterschaltung der Betrag des Wechselstromes gemessen, der bei einer bestimmten Frequenz und Spannung durch den aus Sonde, Medium und Behälterwand gebildeten Kondensator der zu bestimmenden Kapazität C₁ fließt. Der Scheinstrom Iₛ ist allerdings nicht nur von der Kapazität C_{1,} sondern auch von der Leitfähigkeit R₁ des zu messenden Mediums abhängig. Da die Leitfähigkeit R₁ vor allem bei Schüttgütern von unterschiedlichen Faktoren wie z.B. Temperatur oder Luftfeuchtigkeit abhängt, ergeben sich dadurch Ungenauigkeiten.

Eine Methode, den Einfluss dieser Parallelleitfähigkeit zu unterdrücken, ist die Messung bei relativ hohen Frequenzen. Der durch die Kapazität C₁ fließende Anteil des Scheinstromes Iₛ ist proportional zur Frequenz, wohingegen der durch die Leitfähigkeit R₁ verursachte Anteil konstant bleibt. Somit überwiegt bei hohen Frequenzen praktisch immer der kapazitive Anteil. Die Messung bei hohen Frequenzen (>100 kHz) führt allerdings erfahrungsgemäss zu Schwierigkeiten bei langen Sonden mit großen parasitären Induktivitäten.

Eine andere Methode zur Messung der Kapazität C₁ besteht darin, nicht den Scheinstrom Iₛ zu messen, sondern den Blindstrom bei einem Phasenverschiebungswinkel von 90° zwischen Strom und Spannung, was einer reinen Kapazitätsmessung entspricht. Dies lässt sich z.B. mit Hilfe einer Synchrongleichrichterschaltung realisieren (siehe Patent DE 42 44 739 C2). Dieses Verfahren ist bei einzelnen Medien mit Nachteilen verbunden. Bei Medien mit kleiner Dielektrizitätskonstante und großer Leitfähigkeit, die mit einer Scheinstrommessung gut messbar sind, ergeben sich aufgrund des praktisch verschwindenden Blindstromes Schwierigkeiten. Außerdem sind derartige konventionelle Synchrongleichrichterschaltungen erfahrungsgemäss empfindlich gegenüber elektromagnetischen Störungen.

Probleme bei den Messungen ergeben sich z.B. durch Toleranzen der verwendeten Bauteile und z.B. durch Ansatz, der an der Messsonde durch das zu messende Medium auftreten kann. Dieser Ansatz beeinflusst teilweise stark das Messsignal und somit auch den Messwert.

Die Aufgabe der Erfindung besteht also darin, kapazitiv den Füllstand möglichst genau zu messen.

Die Aufgabe wird gemäß Anspruch 1 dadurch gelöst, dass mindestens ein Mikroprozessor in der Feldgeräteelektronik vorgesehen ist, der mindestens das Spannungsansteuersignal (sig₁) erzeugt, und/oder der mindestens den Messstrom (I₂) und/oder eine dazu proportionale Messgröße auswertet. Eine zum Messstrom (I₂) proportionale Messgröße ist z.B. eine zu diesem Strom I₂ proportionale Spannung, die sich z.B. durch einen ohmschen Widerstand erhalten lässt.

Der Grundgedanke ist also, dass ein Mikroprozessor das Spannungssteuersignal (sig₁) erzeugt und somit z.B. auch die Messfrequenz vorgibt, und/oder dass durch den Mikroprozessor das Messsignal-Messstrom (I₂) - ausgewertet wird. Weiterhin kann der Mikroprozessor auch selbständig die Mess- und Anregungsmethode einstellen, indem er z.B. ausgehend von den Ergebnissen unterschiedlicher Probemessungen die optimale Methode auswählt und ggf. auch während des Betriebes, z.B. bei sich ändernden Feldbedingungen jeweils die optimale Messmethode einstellt. Dies kann z.B. bei einem Medium interessant sein, dessen Dielektritzitätskonstante oder dessen Leitwert sich mit der Zeit ändert. Der Mikroprozessor führt somit eine Scheinstrommessung und/oder eine Blindstrommessung und/oder eine Wirkstrommessung durch, je nach den Erfordernissen. Dies ist u.a. möglich, da der Phasenwinkel, bei dem der Strom durch die Sonde ausgewertet wird, in weiten Grenzen beliebig per Software wählbar ist. Eine Leitfähigkeitsmessung ist somit auch möglich. Diese unterschiedlichen Messmethoden lassen sich damit auch miteinander kombinieren und lassen so mehr Auswertemöglichkeiten und auch Informationsgewinn zu. Der Mikroprozessor übernimmt zudem zusätzliches Funktionen wie Linearisierung und Skalierung der Signale. Zudem ist es durch die Verwendung des Mikroprozessors möglich, unterschiedliche Ausgangssignale, welche von der weiteren Verwendung des Ausgangssignals bzw. vom verwendeten Übertragungsprötokoll abhängig sind, zu erzeugen. So kann beispielsweise ein 4...20 mA-Signal, ein 0...10V-Signal, ein PFM-Signal (Pulsfrequenzmodulations-Signal) oder ein binäres Schaltsignal erzeugt werden. Es ist aber auch vorstellbar, das mehrere Ausgangssignale (4...20 mA, 0...10V, PFM Signal, binäres Schaltsignal usw.) für verschiedene Übertragungsprotokolle bzw. Verwendungszwecke erzeugt und ausgegeben werden. Fügt man zwischen den einzelnen Messzyklen Pausen ein, in denen der Mikroprozessor in einen Energiespar-Mode umgeschaltet wird und in denen kein Strom durch die Sonde fließt, so lässt sich der Stromverbrauch auf einen Bruchteil des bei kapazitiven Sensoren üblichen Wertes senken. Dies ist besonders für NAMUR-Anwendungen vorteilhaft. Der Mikroprozessor bringt also sowohl im Bereich der Messmethode, als auch im Bereich der Weiterverarbeitung eine große Flexibilität mit sich. Da ein Grossteil der Funktionen, die in bisheriger Technik mittels Analogschaltungen realisiert waren, in den Mikroprozessor bzw. dessen Software verlagert werden, ist es wesentlich einfacher, kostengünstig einzelne, auf einer Plattform basierende Varianten herzustellen.

Eine Ausgestaltung sieht vor, dass die Messfrequenz und/oder die Form des Spannungsansteuersignals (sig₁ durch den Mikroprozessor einstellbar ist. Somit kann z.B. eine höhere Frequenz eingestellt werden, wenn z.B. eine Blindstrommessung aufgrund der gegebenen Bedingungen weniger sinnvoll und eine Scheinstrommessung bei hohen Frequenzen effektiver ist. Durch den Mikroprozessor ist es leicht, fast jede Frequenz unterhalb der Taktfrequenz zu erzeugen. Der Vorteil ist also, dass durch den Mikroprozessor die Frequenz optimal auf die Messbedingungen eingestellt wird.

Eine Ausgestaltung beinhaltet, dass es sich bei dem Spannungsansteuersignal (sig₁) um ein Bitmuster handelt. Typischerweise wird dieses Bitmuster mit einer Auflösung von 2 oder 3 bit ausgegeben

Die erfindungsgemäße Ausgestaltung sieht vor, dass mindestens ein Digital/AnalogWandler vorgesehen ist, der ein digitales Spannungsansteuersignal (sig₁) in ein analoges Spannungsansteuersignal (sig₁^{a}) umwandelt. Der Mikroprozessor erzeugt ein digitales Signal, welches für die weitere Verarbeitung in analoger Form vorliegen muss. Diese Konvertierung kann z.B. durch ein einfaches Widerstandsnetzwerk realisiert werden.

Die erfindungsgemäße Ausgestaltung beinhaltet, dass mindestens ein Filter vorgesehen ist, der das analoge Spannungsansteuersignal (sig₁^{a}) in eine Sinusansteuerspannung (U₁) umwandelt. Bei dem Filter handelt es sich beispielsweise um einen Tiefpass- oder um einen Bandpassfilter. Es ist allerdings auch möglich, zur Messung beliebige andere Signalformen mit definiertem Oberwellengehalt zu verwenden. Von daher soll Sinussignal auch nur als ein Beispiel betrachtet werden. Weitere Realisierungen liegen der fachlich qualifzierten Person nahe. Bei dem Filter zeigt sich auch ein Vorteil, wenn es sich bei dem Spannungsansteuersignal (sig₁) um ein Bitmuster handelt. Werden die Grenzfrequenz des Filters und die Abstufung des Widerstandsnetzwerkes geschickt gewählt, so ist es möglich, ohne Umschaltung der Grenzfrequenz des Filters annähernd aus jedem Spannungsansteuersignal (sig₁) mit beliebiger Messfrequenz sinusförmige Signale zu erzeugen, da immer nur die einzelnen Stufen geglättet werden müssen. Somit ist eine Frequenzumschaltung problemlos per Software im Mikroprozessor realisierbar und ein Umschalten im analogen Filter entfällt.

Eine Ausgestaltung sieht vor, dass mindestens ein Strom/Spannungswandler vorgesehen ist, der den Messstrom (I₂) in ein zum Messstrom (I₂) proportionales Spannungssignal (U₂) umwandelt. Ein solches Spannungssignal ist dann z.B. einer digitalen Abtastung im Gegensatz zu einem Stromsignal zugänglich. In der einfachsten Ausgestaltung handelt es sich bei dem Strom/Spannungswandler um einen ohmschen Widerstand.

Eine Ausgestaltung beinhaltet, dass mindestens ein Analog/Digital-Wandler vorgesehen ist, das zum Messstrom (I₂) proportionale Spannungssignal (U₂) digitalisiert. In der digitalen Form kann der Mikroprozessor den Messstrom (I₂) oder das dazu proportionale Spannungssignal (U₂) auswerten.

Die erfindungsgemäße Evorteilhafte Ausgestaltung sieht vor, dass der Mikroprozessor in der Feldgerätelektronik den Messstrom (I₂) und/oder das zum Messstrom (I₂) proportionale Spannungssignal (U₂) direkt abtastet. Es ist somit kein Synchrongleichrichter oder eine sonstige Auswertung erforderlich. Der Mikroprozessor tastet das gemessene Signal und/oder ein dazu proportionales Signal - hier die Spannung - direkt ab. Dies spart Kosten und verhindert z.B. auch, dass durch die zwischengeschaltete Elektronik Fehler oder Ungenauigkeiten auftreten können. Besonders werden auch keine Einstrahlungen von außen durch eine konventionelle Gleichrichterschaltung gleichgerichtet, die sonst störend auf die Messung einwirken können. Deshalb ist diese Auswertemethode grundsätzlich wesentlich unempfindlicher gegenüber Störeinstrahlung und -kopplung.

Eine vorteilhafte Ausgestaltung sieht vor, dass mindestens ein Analog/Digitalwandler vorgesehen ist, der die Sinusansteuerspannung (U₁) in eine digitalisierte Sinusansteuerspannung (U₁^{d}) umwandelt. Dies ist für die Auswertung im Mikroprozessor wichtig. Auf diese Weise wird das Signal, mit dem die Messsonde beaufschlagt wird, auch dem Mikroprozessor zugeführt. Es können durch den analogen Elektronikteil Änderungen am Ansteuersignal auftreten, die durch diese Rückführung in die Auswertung des Messsignals einbezogen werden. Durch die Einbeziehung des Ansteuersignals in die Auswertung lassen sich z.B. auch Störungen, Fehler etc. erkennen, melden oder herausrechnen. Es ist auch ein Vergleich zwischen dem Spannungsansteuersignal (sig₁) und der Sinusansteuerspannung (U₁) möglich. Werden das Ansteuersignal und das Messsignal beide durch Analog/Digital-Wandler verarbeitet, die sich auf die gleiche Referenzspannung (z.B. Versorgungsspannung des Prozessors) beziehen, so ist eine Regelung der Anregungsspannung / Betriebsspannung nicht nötig, was wesentlich weniger Aufwand in der Analogschaltung bedeutet.

Die erfindungsgemäße vorteilhafte Ausgestaltung beinhaltet, dass der Mikroprozessor in der Feldgerätelektronik die Sinusansteuerspannung (U₁) direkt abtastet. Somit werden beide Signale direkt abgetastet und es können auch direkt z.B. über die Phasendifferenz zwischen den beiden Signalen die entsprechenden Messgrößen (Blindstrom, Scheinstrom und Wirkstrom) bestimmt werden. Diese Ausgestaltung und die vorherige Ausgestaltung mit der Auswertung des anregenden Signals ergeben somit auch einen Referenzwert für die Auswertung des Messsignals. Das vorgestellte Konzept dieser und der vorhergehenden Ausgestaltung ist grundsätzlich unempfindlich gegenüber Temperatureinflüssen und Bauteiltoleranzen der Bauteilkomponenten im

Analogteil der Messvorrichtung, da das Messergebnis aus Verhältnisbildung der Spannungen U₁ und U₂ gewonnen wird und Phasen- sowie Amplitudenabweichungen sich gleichermaßen auf U₁ und U₂ auswirken. Es wird also durch die Auswertung des anregenden Signals ständig eine Referenzmessung vorgenommen. Dies vereinfacht die Auswertung.

Die erfindungsgemäße Augestaltung beinhaltet, dass der Mikroprozessor in der Feldgerätelektronik die Sinusansteuerspannung (U₁) bei der Auswertung des Messstroms (I₂) und/oder einer dazu proportionalen Messgröße zur Referenzierung nutzt. Somit kann z.B. die Phase genauer ausgewertet werden, wodurch sich mehr Messgrößen (Blindstrom; Scheinstrom und Wirkstrom) aus einer Messung gewinnen lassen, woraus sich wieder mehr Information - z.B. Ansatzerkennung - ergibt.

Eine vorteilhafte Ausgestaltung sieht vor, dass der Mikroprozessor in der Feldgeräteelektronik derartig ausgestaltet ist, dass eine Ansatzerkennung durchgeführt wird. Durch die Auswertung von der Phase zwischen der Ansteuerspannung und dem zum Messstrom proportionalen Spannungssignal und des Scheinstroms lässt sich beispielsweise erkennen, ob sich Ansatz an der Messsönde gebildet hat oder ob z.B. der Ansatz zunimmt. Dies wird durch die digitale Abtastung des gesamten Messsignals, bzw. auch über die Referenzierung durch das Ansteuersignals ermöglicht: Ändert sich z.B. über die Zeit der Wirkstrom I_{W}, so können daraus Aussagen über einen Ansatz getätigt werden.
In der Erfindung werden also die Ansteuerspannung und das Messsignal, bzw. die dazu proportionale Spannung direkt abgetastet. Durch diese vollständige Abtastung beider Signalverläufe können z.B. mit einer Messung die Phase und der Scheinstrom bestimmt werden. Dies wiederum erlaubt es, dass nicht nur die Kapazität und damit der Füllstand bestimmt wird, sondern dass z.B. auch Ansatz am Messsensor erkannt werden kann und dass somit z.B. in Hinsicht auf *predictive maintenance* auch gesonderte Alarme ausgegeben werden können, um auf den Ansatz aufmerksam zu machen und um somit früh genug darauf reagieren zu können.

Die Erfindung wird anhand der nachfolgenden Zeichnungen näher erläutert. Es zeigt:
Fig. 1: ein Blockschaltbild der Vorrichtung, und
Fign. 2a und 2b: zwei zeitliche Verläufe der auftretenden Signale unter zwei unterschiedlichen Feldbedingungen.

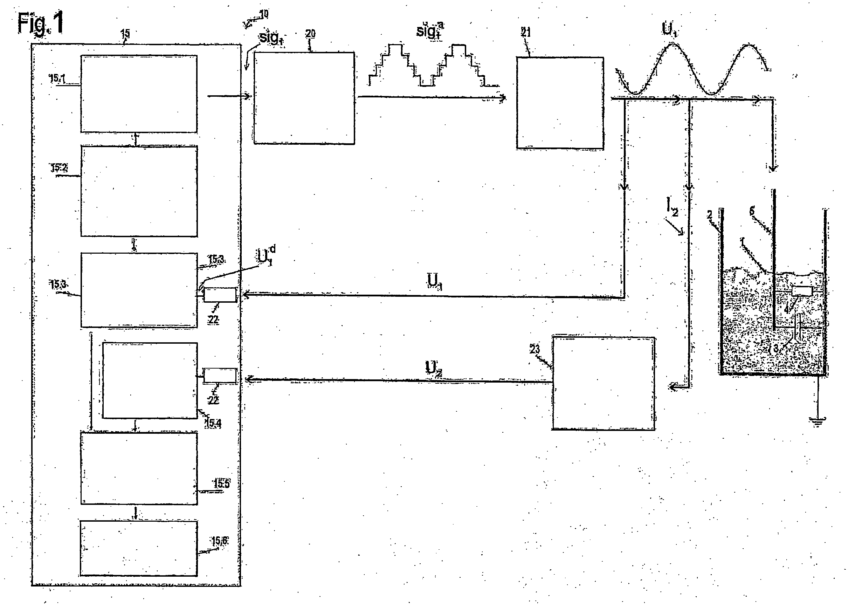

Fig.1 zeigt ein Blockschaltbild einer möglichen Ausführung. Zentrales Element in der Schaltung ist ein Mikroprozessor 15, der innerhalb der Feldgerätelektronik 10 mittels einiger exemplarischer Funktionsblöcke 15.1 bis 15.6 folgende Funktionen übernimmt:
Die Einheit für die Ausgabe des Messsignale 15.1 gibt ein Bitmuster zur Erzeugung eines Rechteck- oder Treppensignals mit der vom Mikroprozessor passend eingestellten Messfrequenz aus. Typischerweise wird dieses Bitmuster mit einer Auflösung von 2 oder 3 bit ausgegeben und kann über ein einfaches Widerstandsnetzwerk 20 in eine analoge Treppenspannung sig₁^{a} gewandelt werden (einfachste Digital/Analog-Wandlung). Diese Treppenspannung sig₁^{a} wird durch eine anschließende Filterung 21 - z.B. durch einen Tiefpass- oder durch einen Bandpassfilter - zu einer sinusförmigen Messspannung U₁ umgeformt. In der Einheit 15.2 werden die Signalerzeugung (Wahl der Messfrequenz) und der gewünschte Abtastzeitpunkt der Analog/Digital-Wandler 22 gesteuert. In einem weiteren Funktionsblock 15.3 wird die Anregungsspannung U₁ nach dem Analog/Digital-Wandler 22 gemessen. Gleiches geschieht mit der Messsignalspannung U₂ nach der Analog-Digital-Wandlung 22 der zum durch die Sonde fließenden Strom I₂ direkt proportionalen Messspannung U₂, die mittels des Strom-Spannungswandlers 23 generiert wird. Anschließend Verhältnisbildung, Skalierung und Linearisierung der gemessenen Spannungen U₁ und U₂ im Funktionsblock 15.5, also die eigentliche Auswertung. Die Phasenwinkeldifferenz, zu der das Messsignal ausgewertet wird, lässt sich einfach und praktisch durch den Mikroprozessor einstellen. Der Mikroprozessor erlaubt jedoch auch eine vollständige Abtastung des Messsignals, so dass nicht nur ein Wert des Messsignals zur Auswertung herangezogen wird, sondern dass der gesamte Verlauf des Messsignals ausgewertet wird. Dadurch lässt sich die Phase zwischen der Messspannung U₁ und der Messsignalspannung U₂ und der Blindstrom bestimmen. Dies ermöglicht dann die Bestimmung der Kapazität und z.B. auch den Rückschluss auf einen Ansatz z.B. am Messsensor 5. Durch die Erhöhung der Anzahl der Datenpunkte der Messung erhöht sich auch die Information. Bei der Auswertung kann dann auch eine Verbindung zum Funktionsblock 15.2 vorgesehen sein, so dass aufgrund des erhaltenen Ergebnisses, z.B. auch in Verbindung mit vorgegeben Grenzwerten o.ä. die optimale Mess- und Auswertemethode vorgenommen wird. Weiterhin wird ein entsprechendes Ausgangssignal erzeugt, welches ggf. auch über einen Digital/Analog-Wandler laufen kann. Aufgrund der erhaltenen Werte wird dann vom Funktionsblock 15.6 das gewünschte Ausgangssignal erzeugt und z.B. über einen Digital/Analog-Wandler oder über einen digitalen Port ausgegeben. Im Ausführungsbeispiel ist ein Mikroprozessor dargestellt, der mehrer Funktionsblöcke aufweiset. Es kann sich natürlich auch um mehrere, miteinander verbundene Mikroprozessoren handeln, die die einzelnen Aufgaben ausführen. Dargestellt sind weiterhin der Behälter 2 mit dem Medium 1, in welches der Messsensor 5 eintaucht. Dargestellt sind auch der Kondensator 3, der sich durch den Sensor 5 und die Wand des Behälters 2 ergibt. Zudem bilden der Sensor 5, das Medium 1 und die Wand des Behälters 2 jedoch auch einen Widerstand 4, über den ebenfalls ein Strom fließt.

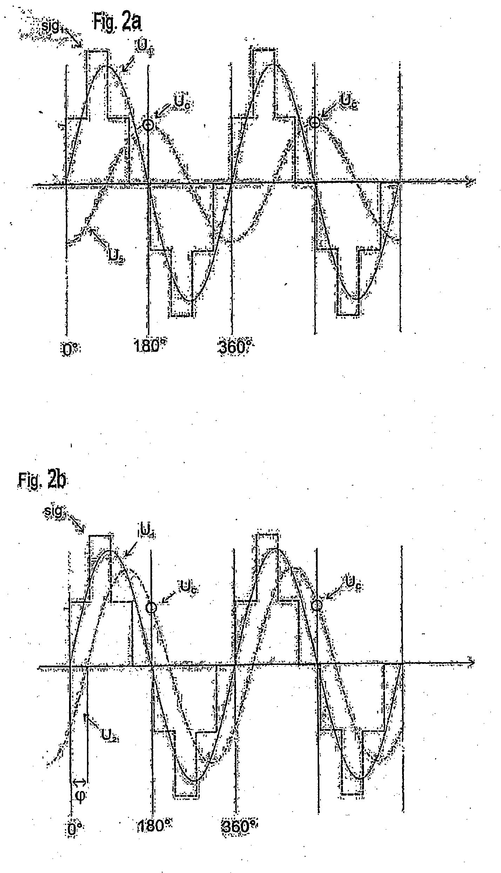

In Fign. 2a und 2b finden sich die Signale sig₁, U₁ und U₂ in Abhängigkeit von der Zeit. Die Anregungsspannung U₁ folgt mit einer gewissen, durch die Filterung verursachten, Phasenverzögerung dem vom Mikroprozessor erzeugten Signal sig₁. Diese Phasenverzögerung lässt sich in die Auswertung einbeziehen, indem die im Mikroprozessor 15 abgetastete Anregungsspannung U₁ der Referenzierung dient. Nimmt man ein rein kapazitives Verhalten der Anordnung Sonde/Medium/Behälter mit der Kapazität C₁ an (Fig.2a), dann ist die Spannung U₂, die proportional zum durch die Sonde fließenden Strom ist, um 90° zur Spannung U₁ phasenverschoben. Wird nun die Spannung U₂ jeweils bei exakt 180° Phasenverschiebung gegenüber der Anregungsspännung U₁ gemessen, erhält man im Fall rein kapazitiver Belastung der Sonde immer die maximale Amplitude von U₂ (hier mit U_{c} bezeichnet).

Nimmt man nun zusätzlich zur Kapazität C₁ einen Parallelwiderstand des Mediums R₁ an (Fig.2b; vgl. Fig. 1), erhöht sich der Betrag des Stromes durch die Sonde und somit der Spannung U₂. Gleichzeitig wird der Phasenwinkel zwischen U₁ und U₂ kleiner als 90°. Wird allerdings die Spannung U₂ auch in diesem Fall bei einem Phasenwinkel von 180° gegenüber der Anregungsspannung U₁ gemessen, ändert sich die Amplitude von U_{C} gegenüber dem in Fig. 2a dargestellten Fall nicht. Auf diese Weise ist es möglich, die Kapazität C₁ unabhängig vom Parallelwiderstand R₁ zu messen. Da viele Probleme bei kapazitiven Messungen durch leitfähigen Ansatz und durch Feuchtigkeitsschwankungen, welche die Leitfähigkeit des zu messenden Mediums verändern, verursacht werden, bringt dies deutliche Vorteile für den Anwender. Dieser Ansatz lässt sich umgekehrt erkennen durch die Auswertung des Scheinstromes Iₛ. Die Auswertung von Blind- und Scheinstrom wird durch die Abtastung des ganzen Messsignals möglich. In Fig. 2b ist die Phase / der Phasenwinkel ϕ zwischen U₁ und U₂ eingezeichnet. Über diese Phase lässt sich dann der Wirkanteil U_{W} der Messspannung U₂ wie folgt berechnen: Uw = U₂ * cos(ϕ). Mit diesem Wert ist eine Ansatzerkennung möglich, da eine Zunahme des Ansatzes üblicherweise mit einer Zunahme des Wirkanteils verbunden ist. Der Blindanteil U_{B} der Messspannung U₂ errechnet sich über: U_{B} = U₂ * sin(ϕ). Dieser Wert ermöglicht die Bestimmung der Kapazität und somit den Füllstand des Mediums.

### Bezugszeichenliste

- 1: Medium
- 2: Behälter
- 3: Kapazität
- 4: Widerstand
- 5: Füllstandssonde
- 10: Feldgeräteelektronik
- 15: Mikroprozessor
- 15.1: Erzeugung Messspannung
- 15.2: Steuerung Signalerzeugung + Abtastung
- 15.3: Messung Anregungsspannung
- 15.4: Messsignal-Abtastung
- 15.5: Referenzierung, Skalierung und Linearisierung
- 15.6: Erzeugung Ausgangssignal
- 20: Digital/Analog-Wandler
- 21: Filter
- 22: Analog/Digital-Wandler
- 23: Strom/Spannungswandler

## Patentansprüche

1. Vorrichtung zur kapazitiven Bestimmung und/oder Überwachung des Füllstandes eines Mediums (1) in einem Behälter (2),
mit mindestens einer Füllstandssonde (5),
und
mit mindestens einer Feldgeräteelektronik (10),
die mit der Füllstandssonde (5) verbunden ist,
die ein Spannüngsansteuersignal (sig₁) zur Ansteuerung der Füllstandssonde (5) erzeugt,
und
die einen Messstrom (I₂) der Füllstandssonde (5) empfängt und auswertet,
wobei mindestens ein Mikroprozessor (15) in der Feldgeräteelektronik (10) vorgesehen ist,
der mindestens das Spannungsansteuersignal (sig₁) erzeugt,
und/oder
der mindestens den Messstrom (I₂) und/oder eine dazu proportionale Messgröße auswertet,
**dadurch gekennzeichnet,**
**dass** mindestens ein Digital/Analog-Wandler (20) vorgesehen ist, der das digitale Spannungsansteuersignal (sig₁) in ein analoges Spannungsansteuersignal (sig₁^{a}) umwandelt,
**dass** mindestens ein Filter (21) vorgesehen ist, der das analoge Spannungsansteuersignal (sig₁^{a}) in eine Sinusansteuerspannung (U₁) umwandelt,
**dass** der Mikroprozessor (15) in der Feldgerätelektronik (10) den Messstrom (I₂) und/oder ein zum Messstrom (I₂) proportionales Spannungssignal (U₂) direkt abtastet,
**dass** der Mikroprozessor (15) in der Feldgerätelektronik (10) die Sinusansteuerspannung (U₁) direkt abtastet,
**dass** der Mikroprozessor (15) den Messstrom (I₂) und/oder das
Spannungssignal (U₂) und die Sinusansteuerspannung (U₁) vollständig abtastet, und
**dass** der Mikroprozessor (15) in der Feldgerätelektronik (10) die Sinusansteuerspannung (U₁) bei der Auswertung des Messstroms (I₂) und/oder einer dazu proportionalen Messgröße zur Referenzierung nutzt.

2. Vorrichtung nach Anspruch 1,
**dadurch gekennzeichnet,**
**dass** die Messfrequenz und/oder die Form des Spannungsansteuersignals (sig₁) durch den Mikroprozessor (15) einstellbar ist.

3. Vorrichtung nach Anspruch 1 oder 2,
**dadurch gekennzeichnet,**
**dass** es sich bei dem Spannungsansteuersignal (sig₁) um ein Bitmuster handelt.

4. Vorrichtung nach Anspruch 1,
**dadurch gekennzeichnet,**
**dass** mindestens ein Strom/Spannungswandler (23) vorgesehen ist, der den Messstrom (I₂) in das zum Messstrom (I₂) proportionale Spannungssignal (U₂) umwandelt.

5. Vorrichtung nach Anspruch 1 oder 6,
**dadurch gekennzeichnet,**
**dass** mindestens ein Analog/Digital-Wandler (22) vorgesehen ist, der das zum Messstrom (I₂) proportionale Spannungssignal (U₂) digitalisiert.

6. Vorrichtung nach Anspruch 5,
**dadurch gekennzeichnet,**
**dass** mindestens ein Analog/Digitalwandler (22) vorgesehen ist, der die Sinusansteuerspannung (U₁) in eine digitalisierte Sinusansteuerspannung (U₁^{d}) umwandelt.

7. Vorrichtung nach einem oder mehreren der Ansprüche 1 bis 11.
**dadurch gekennzeichnet,**
**dass** der Mikroprozessor (15) in der Feldgeräteelektronik (10) derartig ausgestaltet ist, dass eine Ansatzerkennung durchgeführt wird.

## Claims

1. Apparatus for the capacitance determination and/or monitoring of the level of a medium (1) in a vessel (2),
with at least one level probe (5),
and
with at least one field device electronics system (10).
which is connected to the level probe (5),
which generates a voltage control signal (sig₁) to control the level probe (5), and
which receives and evaluates a measurement current (I₂) of the level probe (5),
wherein at least one microprocessor (15) is provided in the field device electronics system (10),
which generates the voltage control signal (sig₁) at least,
and/or
which at least evaluates the measurement current (I₂) and/or a measured variable proportional to the measurement current,
**characterized in that**
at least one digital-to-analog converter (20) is provided which converts the digital voltage control signal (sig₁) into an analog voltage control signal (sig₁^{a}),
that at least one filter (21) is provided that converts the analog voltage control signal (sig₁^{a}) into a sinusoidal control voltage (U₁),
that the microprocessor (15) in the field device electronics (10) directly scans the measurement current (I₂) and/or a voltage signal (U₂) proportional to the measurement current (I₂),
that the microprocessor (15) in the field device electronics (10) directly scans the sinusoidal control voltage (U₁),
that the microprocessor (15) completely scans the measurement current (I₂) and/or the voltage signal (U₂) and the sinusoidal control voltage (U₁), and
that the microprocessor (15) in the field device electronics (10) uses the sinusoidal control voltage (U₁) as a reference in the evaluation of the measurement current (I₂) and/or a measured variable proportional to the measurement current.

2. Apparatus as claimed in Claim 1,
**characterized in that**
the measurement frequency and/or the form of the voltage control signal (sig₁) can be adjusted by the microprocessor (15).

3. Apparatus as claimed in Claim 1 or 2,
**characterized in that**
the voltage control signal (sig₁) is a bit pattern.

4. Apparatus as claimed in Claim 1,
**characterized in that**
at least one current/voltage converter (23) is provided which converts the measurement current (I₂) into the voltage signal (U₂) proportional to the measurement current (I₂).

5. Apparatus as claimed in Claim 1 or 6,
**characterized in that**
at least one analog-to-digital converter (22) is provided which digitizes the voltage signal (U₂) which is proportional to the measurement current (I₂).

6. Apparatus as claimed in Claim 5,
**characterized in that**
at least one analog-to-digital converter (22) is provided which converts the sinusoidal control voltage (U₁) into a digitized sinusoidal control voltage (U₁^{d}).

7. Apparatus as claimed in one or more of the Claims 1 to 11,
**characterized in that**
the microprocessor (15) in the field device electronics (10) is designed in such a way that deposit buildup detection is performed.

## Revendications

1. Dispositif destiné à la détermination capacitive et/ou à la surveillance du niveau de remplissage d'un produit (1) dans un réservoir (2),
avec au moins une sonde de niveau (5),
et
avec au moins une électronique d'appareil de terrain (10),
qui est reliée avec la sonde de niveau (5),
qui génère un signal de commande de tension (sig₁) destiné à la commande
de la sonde de niveau (5),
et
qui reçoit et exploite un courant de mesure (I₂) de la sonde de niveau (5),
pour lequel est prévu au moins un microprocesseur (15) dans l'électronique d'appareil de terrain (10),
qui génère au moins le signal de commande de tension (sig₁),
et/ou
qui exploite au moins le courant de mesure (I₂) et/ou une grandeur de mesure proportionnelle à ce courant,
**caractérisé**
**en ce qu'**est prévu au moins un convertisseur analogique / numérique (20), qui convertit le signal de commande de tension (sig₁) en un signal de commande de tension analogique (sig₁^{a}),
**en ce qu'**est prévu au moins un filtre (21), qui convertit le signal de commande de tension analogique (sig₁^{a}) en une tension de commande sinusoïdale (U₁), en ce que le microprocesseur (15) intégré dans l'électronique d'appareil de terrain (10) échantillonne directement le courant de mesure (I₂) et/ou un signal de tension (U₂) proportionnel au courant de mesure (I₂),
**en ce que** le microprocesseur (15) intégré dans l'électronique d'appareil de terrain (10) échantillonne directement la tension de commande sinusoïdale (U₁),
**en ce que** le microprocesseur (15) échantillonne entièrement le courant de mesure (I₂) et/ou le signal de tension (U₂) et la tension de commande sinusoïdale (U₁), et
**en ce que** le microprocesseur (15) intégré dans l'électronique d'appareil de terrain (10) utilise la tension de commande sinusoïdale (U₁) à des fins d'exploitation du courant de mesure (I₂) et/ou une grandeur de mesure proportionnelle à ce courant à des fins de référencement.

2. Dispositif selon la revendication 1,
**caractérisé**
**en ce que** la fréquence de mesure et/ou la forme du signal de commande de tension (sig₁) est réglable par l'intermédiaire du microprocesseur (15).

3. Dispositif selon la revendication 1 ou 2,
**caractérisé**
**en ce que**, concernant le signal de commande de tension (sig₁), il s'agit d'une séquence de bits.

4. Dispositif selon la revendication 1,
**caractérisé**
**en ce qu'**est prévu au moins un convertisseur de courant / tension (23), qui convertit le courant de mesure (I₂) en le signal de tension (U₂) proportionnel au courant de mesure (I₂).

5. Dispositif selon la revendication 1 ou 6,
**caractérisé**
**en ce qu'**est prévu au moins un convertisseur analogique / numérique (22), qui numérise le signal de tension (U₂) proportionnel au courant de mesure (I₂).

6. Dispositif selon la revendication 5,
**caractérisé**
**en ce qu'**est prévu au moins un convertisseur analogique / numérique (22), qui convertit la tension de commande sinusoïdale (U₁) en une tension de commande sinusoïdale numérisée (U₁^{d}).

7. Dispositif selon l'une ou plusieurs des revendications 1 à 11,
**caractérisé**
**en ce que** le microprocesseur (15) intégré dans l'électronique d'appareil de terrain (10) est conçu de telle sorte qu'une détection de colmatage est effectuée.
